(19) Europäisches Patentamt
European Patent Office
Office européen des brevets

(11) **EP 1 390 913 B1**

(12) **EUROPÄISCHE PATENTSCHRIFT**

(45) Veröffentlichungstag und Bekanntmachung des Hinweises auf die Patenterteilung:
**22.09.2004   Patentblatt 2004/39**

(51) Int Cl.⁷: **G06T 5/00**

(86) Internationale Anmeldenummer:
**PCT/DE2001/002015**

(21) Anmeldenummer: **01953106.0**

(22) Anmeldetag: **25.05.2001**

(87) Internationale Veröffentlichungsnummer:
**WO 2002/095681 (28.11.2002 Gazette 2002/48)**

(54) **VORRICHTUNG UND VERFAHREN ZUR VERARBEITUNG VON BILDDATEN**

DEVICE AND METHOD FOR THE PROCESSING OF IMAGE DATA

DISPOSITIF ET PROCEDE POUR LE TRAITEMENT DE DONNEES D'IMAGE

(84) Benannte Vertragsstaaten:
**DE FR GB IT**

(43) Veröffentlichungstag der Anmeldung:
**25.02.2004   Patentblatt 2004/09**

(73) Patentinhaber: **SIEMENS AKTIENGESELLSCHAFT**
**80333 München (DE)**

(72) Erfinder:
• **BELAU, Horst**
  **84085 Langquaid (DE)**

• **ROESL, Reinhard**
  **93170 Bernhardswald (DE)**
• **SPALKE, Stefan**
  **93092 Barbing (DE)**
• **WAGNER, Ulrich**
  **93055 Regensburg (DE)**

(56) Entgegenhaltungen:
EP-A- 1 087 336          WO-A-00/44181
US-A- 5 506 793          US-A- 6 141 432

**Beschreibung**

Die Erfindung betrifft ein Verfahren und eine Vorrichtung zur Verarbeitung von Bilddaten, insbesondere in Bilderfassungssystemen für Insassenschutzsysteme.

Aus Microsoft Research Technical Report MSR-TR-98-71 "A Flexible New Technique for Camera Calibration" ist ein Verfahren zur Kompensation von Bildverzerrungen bekannt, bei dem eine mathematische Rechenvorschrift verwendet wird, mit der ein von einer Kamera aufgenommenes Sourcebild auf ein Targetbild abgebildet wird. Die Rechenvorschrift berechnet aus dem in einen Arbeitsspeicher geladenen Sourcebild das entzerrte Targetbild.

Aus der Patentschrift US-A-6 141 432 sind Sitzbelegungsklassifikationssysteme bekannt, die verschiedene Steuereinheiten aufweisen, wobei eine nachgeschaltete Steuereinheit die Klassifizierung übernimmt, während eine vorgeschaltete Einheit Bildvorverarbeitung Leistel- und Distanzdaten ermittelt. Aus der internationalen Anmeldung WO 00/44181 kennt man Digitalkameras mit "on board" - Entzerrung, die zu kleineren Targetbildern führen kann.

In Insassenschutzsystemen werden hohe Anforderungen an die Geschwindigkeit der optischen Bilderkennung gestellt, da die Position einer Person auf einem Fahrzeugsitz bei einem Unfall schnell festgestellt werden muß, um das Rückhaltesystem entsprechend auszulösen. Die in der Kamera eines Bilderfassungssystems vorhandenen Bildsensoren nehmen in kurzer Abfolge Bilder eines Bildbereichs auf, wobei die dabei entstehenden Bilddaten eines Bildes bereits vor Aufnahme eines nächsten Bildes von einer Steuereinheit aus dem Bildsensor ausgelesen werden muss.

Dabei ist zum Abspeichern der Bilddaten eines Bildes in der Steuereinheit viel Speicherplatz, zur Übertragung der Bilddaten auf die Steuereinheit ein exaktes Timing und zur weiteren Verarbeitung der Bilder in der Steuereinheit eine hohe Rechenleistung nötig.

Aufgabe der Erfindung ist es daher, den Verarbeitungsaufwand von Bilddaten kostengünstig zu reduzieren.

Die Aufgabe wird durch die Merkmale der unabhängigen Ansprüche gelöst.

Dabei wird ein Verfahren zur Kompensation von Bildverzerrungen vorgeschlagen, das insbesondere in Bilderfassungssystemen für Insassenschutzsysteme einsetzbar ist. Ein durch die Optik eines Kamerasystems verzerrtes Bild ergibt im Bildsensor des Kamerasystems ein Sourcebild (Quellbild), das abhängig von der Qualität der Optik, der Brennweite des Kamerasystems und anderer optischer Parameter auf unterschiedliche Art und Weise verzerrt ist. Das Sourcebild ist aufgeteilt in einzelne Sourcepixel, die jeweils an einer vorgegebenen Position in dem Sourcebild angeordnet ist und deren von dem Bildsensor aufgenommenen Grauwerte jeweils unter einer vorgegebenen Sourcepixeladresse im Bildsensor gespeichert sind.

Über eine vorgegebene Abbildungsvorschrift wird das Sourcebild in ein Targetbild abgebildet, wodurch ein entzerrtes Targetbild entsteht. Das Targetbild besteht aus Targetpixel, deren Grauwerte jeweils unter einer Targetpixeladresse in einem Targetspeicher gespeichert werden. Dabei wird ein Sourcepixel in keines, ein oder mehrere Targetpixel abgebildet. Dabei wird der Grauwert der Sourcepixeladresse unter der Targetpixeladresse übernommen.

Die Abbildungsvorschrift zum Entzerren eines Sourcebildes in ein Targetbild wird in einem Speicher einer ersten Steuereinheit tabellarisch in einer Rektifizierungstabelle hinterlegt. Die erste Steuereinheit übernimmt auch die komplexe und zeitgenaue Ansteuerung des/der Bildsensor/en. Dadurch ist vorteilhaft eine schnelle Abarbeitung der Abbildungsvorschrift möglich. Weiterhin ist es nicht nötig, das Sourcebild zwischenzuspeichern, wodurch erheblicher Speicherplatz eingespart wird.

Dadurch wird vorteilhaft der benötigte Speicherplatz reduziert und gleichzeitig die Entzerrung des Sourcebildes ohne Verzögerung durchgeführt, was insbesondere für Insassenschutzsysteme erforderlich ist.

Durch die Abbildung des Sourcebildes in das Targetbild nach der vorgegebenen Abbildungsvorschrift entsteht ein Targetbild, das weniger Pixel aufweist als das Sourcebild. Somit gibt es einige Sourcepixel, die nicht in das Targetpixel abgebildet werden. Weiterhin nimmt der Bildsensor im Allgemeinen mehr Informationen auf als tatsächlich benötigt wird. Diese redundanten Informationen werden durch die Abbildungsvorschrift ausgefiltert. Somit wird vorteilhaft eine Filterung und eine Datenreduktion durchgeführt. In der ersten Steuereinheit wird nur noch das durch die Abbildungsvorschrift erzeugte Targetbild abgespeichert. Dadurch wird wiederum Speicherplatz in der ersten Steuereinheit gespart.

Vorzugsweise sind an die erste Steuereinheit zwei Bildsensoren angeschlossen. Die entzerrten Targetbilder werden in der ersten Steuereinheit vorzugsweise zeilenweise miteinander korreliert, wodurch ein Abstandsbild entsteht, das neben Grauwertinformationen auch Abstandsinformationen der betreffenden Bildpunkte von der Kamera enthält. Vorzugsweise wird aus den Bilddaten der beiden Targetbilder jeweils nur ein Teil des Abstandsbildes gebildet, zwischengespeichert, und zyklisch oder auf Anforderung an eine zweite Steuereinheit ausgegeben. Vorteilhaft wird dadurch Speicherplatz eingespart.

Die erste Steuereinheit steuert den bzw. die Bildsensor(en) an, sorgt für ein an den Bildsensor angepasstes Timing und führt im wesentlichen alle zeitkritischen und rechenintensiven Bildverarbeitungs-Verfahrensschritte durch. Die dabei entstehenden Bilddaten werden über eine vorgegebene Schnittstelle, vorzugsweise eine Standardschnittstelle wie z.B. PCI, Local Bus usw., an eine zweite Steuereinheit ausgegeben.

Die zweite Steuereinheit übernimmt die Rechenergebnisse der ersten Steuereinheit, beispielsweise das Abstandsbild oder Teile des Abstandsbildes, und steuert die erste Steuereinheit. In der zweiten Steuereinheit werden die erhaltenen Bilddaten mit Hilfe von Algorithmen zur Sitzbelegungs-Klassifizierung ausgewertet. Es kann beispielsweise die Position eines Insassen auf einem Fahrzeugsitz, die Position des Kopfes des Insassen, die Position eines Kindersitzes oder ein unbelegter Fahrzeugsitz erkannt werden. Die daraus resultierenden Daten werden an ein Airbag-Steuergerät (ECU) weitergegeben.

Die Kameraoptik eines Bildsensors weist Fertigungstoleranzen auf. Zum Ausgleichen der Fertigungstoleranzen wird vorzugsweise am Ende des Fertigungsbandes die zur gegebenen Kameraoptik gehörige Rektifizierungstabelle bestimmt, indem die Bilddaten eines von einem der Bildsensoren aufgenommenen Referenzbildes in einem ersten Speicher zwischengespeichert werden. Dieser erste Speicher kann sich in der ersten oder der zweiten Steuereinheit befinden. Mit Hilfe einer Initialisierungsroutine wird die geeignete Rektifizierungstabelle erstellt und in diesem ersten Speicher abgespeichert, so dass der Speicherplatz des ersten Speichers vorteilhaft doppelt genutzt wird. Diese Initialisierungsroutine wird vorzugsweise in der zweiten Steuereinheit durchgeführt. Die Rektifizierungstabelle wird in einem Festwertspeicher der ersten Steuereinheit abgespeichert. Alternativ wird die Rektifizierungstabelle in dem Festwertespeicher der zweiten Steuereinheit gespeichert, z.B. einem Flash-Speicher, und beim Start in die erste Steuereinheit übertragen.

Vorteilhafte Weiterbildungen und Ausgestaltungen der Erfindung sind in den abhängigen Patentansprüchen angegeben.

Die Erfindung wird anhand der Zeichnung erläutert; es zeigen:

Figur 1    den Innenraum eines Fahrzeugs mit einem optischen Bilderfassungssystem;
Figur 2    das Blockschaltbild einer Vorrichtung zur Bildverarbeitung;
Figur 3    das Flussdiagramm einer Initialisierungsroutine zum Ausgleichen von Toleranzen einer Kameraoptik;
Figur 4    das Flussdiagramm einer Bildverarbeitungsroutine;

Figurenelemente mit den gleichen funktionellen Merkmalen erhalten in den folgenden Figuren die gleichen Bezugszeichen.

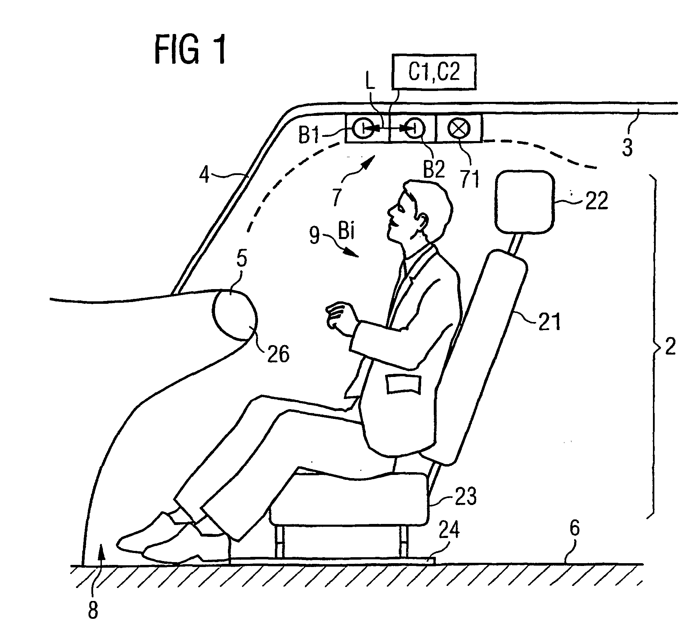

In Figur 1 ist ein Fahrzeug 1 schematisch dargestellt, in dem sich ein Fahrzeugsitz 2 mit einer Sitzfläche 23, einer Sitzlehne 21 und einer darauf befindlichen Kopfstütze 22 befindet. Am Himmel des Fahrzeugdachs 3 vorzugsweise zwischen den beiden vorderen Fahrzeugsitzen, ist ein optisches Kamerasystem 7, 71, B1, B2, C1,C2 angeordnet, mit dem ein vorgegebener Bildbereich Bi des Fahrzeuginnenraums erfasst werden kann. Vorzugsweise zwei Bildsensoren B1, B2 erfassen über eine Kameraoptik den Bildbereich Bi mit dem Fahrzeugsitz 2 mit einem fakultativ darauf befindlichen Objekt 9. In Figur 1 ist das Objekt 9 schematisch als Fahrzeuginsasse dargestellt.

In weiteren Ausführungsformen können die Objekte 9 als Kindersitz, Gegenstände o.ä. ausgebildet sein, oder der Fahrzeugsitz 2 kann unbelegt sein.

Im vorderen Teil des Fahrzeugs 1 unter der Windschutzscheibe 4 ist ein Armaturenbrett 5 angeordnet, unter dem sich ein Fußraum 8 für die Füße und Beine des Insassen 9 befindet und in dem sich ein Airbag 26 befindet. Der Fußraum 8 wird nach unten von dem Fahrzeugboden 6 begrenzt, auf dem Sitzpositionsschienen 24 angeordnet sind. Der Fahrzeugsitz 2 ist im Bereich des Unterteils der Sitzfläche 23 über Stützmittel mit der Sitzpositionsschiene 24 verbunden. Somit ist der Fahrzeugsitz 2 in X-Richtung, d. h. Fahrzeugrichtung, verschiebbar angeordnet.

Das Kamerasystem 7 enthält vorzugsweise zwei Bildsensoren B1, B2, eine vorzugsweise mit mehreren Leuchtdioden oder midnestens einer LASER-Diode bestückte Lichtquelle 71 und eine Auswerteeinheit C1,C2. Der Bildbereich Bi wird sowohl von der Lichtquelle 71 als auch vom eventuell vorhandenen Umgebungslicht beleuchtet. Die optischen Achsen der beiden Bildsensoren B1, B2 weisen einen vorgegebenen Abstand L auf. Dadurch ist es möglich, aus den aufgenommenen Bildern der beiden Bildsensoren B1, B2 über Stereo-Bildverarbeitungsverfahren Abstandsinformationen der Objekte im vorgegebenen Bildbereich Bi zum Kamerasystem 7 zu erfassen. Die Kamera 7 enthält vorzugsweise die beiden Bildsensoren B1, B2 und die Lichtquelle 71 in einem kompakten Gehäuse. Die Auswerteeinheit C1, C2 ist ebenfalls bevorzugt in dem kompakten Gehäuse angeordnet, da die von den Bildsensoren B1,B2 an die Auswerteeinheit C1,C2 übertragene Datenmenge groß ist. Der beispielhafte Bildsensor B1 weist eine matrixförmige Pixelanordnung mit einer Auflösung von 320x288 Pixel und mit einer Grauwerttiefe bzw. einer Grauwertauflösung von 8 bit = 256 Grauwerte pro Pixel auf. Bei zwei Bildsensoren B1 und B2 und einer minimalen Abtastrate von 50 Bilder pro Sekunde pro Bildsensor resultiert eine Gesamtdatenübertragungsrate zwischen den Bildsensoren B1,B2 und der Auswerteeinheit C1,C2 von

$$320x288x8x2x50 = 73,728 \text{ Mbit/s.}$$

In einer weiteren Ausführungsform ist nur ein Bildsensor B1 oder B2 vorgesehen, wodurch sich die Kosten reduzieren. Die benötigten Abstandsinformationen werden hier vorzugsweise über Lichtlaufzeitmessungen oder andere Bildverarbeitungsverfahren ermittelt.

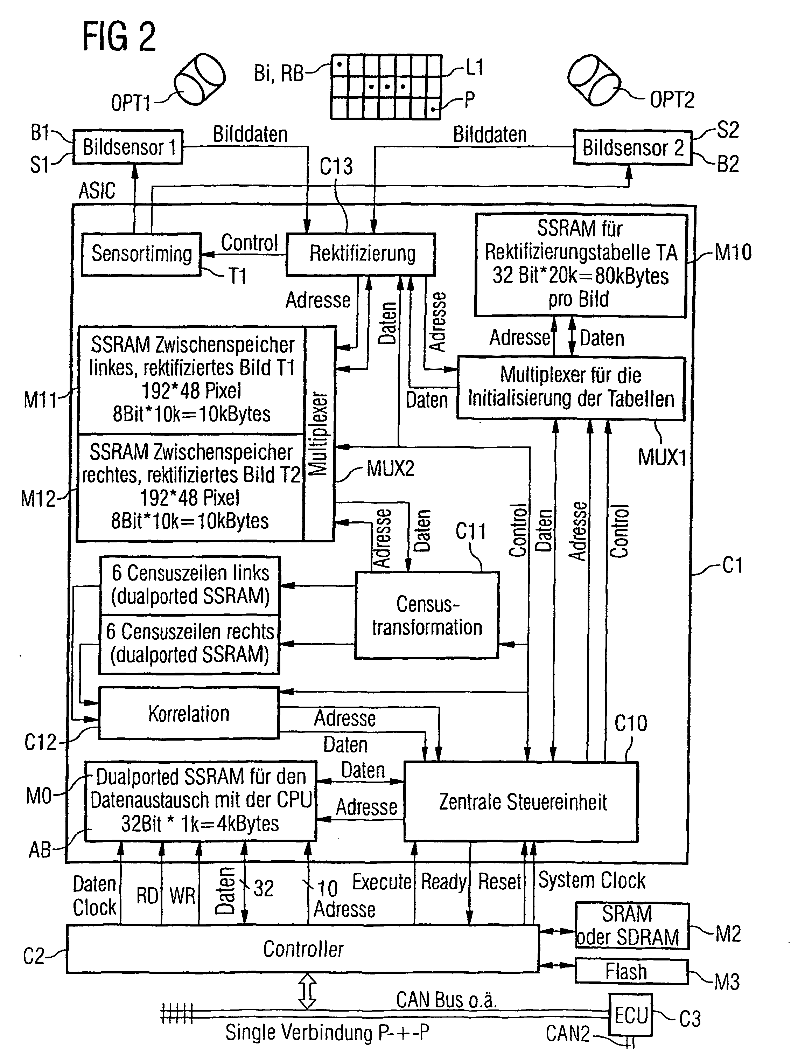

In der Figur 2 ist das Blockschaltbild einer Vorrichtung zur Bildverarbeitung dargestellt. Zwei Bildsensoren B1 (links) und B 2(rechts) erfassen jeweils über eine Optik OPT 1, OPT 2 einen Bildbereich Bi. In beiden Bildsensoren B1, B2 laufen im wesentlichen die gleichen Vorgange ab, so dass im folgenden anhand des linken Bildsensors B1 beispielhaft die Funktion der Bildverarbeitung beschrieben wird.

Durch die Optik OPT 1 wird das zu erfassende Bild des Bildbereichs Bi verzerrt, so dass im Bildsensor B1 ein verzerrtes Sourcebild S1 entsteht. Der Bildsensor B1 wird von einer ersten Steuereinheit C1 angesteuert. Eine Sensortimingeinheit T1 in der ersten Steuereinheit C1 liefert zeitgenau die nötigen Ansteuersignale für den Bildsensor B1. Das vom Bildsensor B1 erfasste Sourcebild S1 muss innerhalb kurzer Zeit ausgelesen werden, beispielsweise bei einer Abtastrate von 50 Bildern pro Sekunde in wenigen Millisekunden ausgelesen werden. Zudem ist aufgrund des analogen Aufbaus des Bildsensors B1 die Speicherzeit eines Sourcebildes S1 im Bildsensor B1 kurz.

Die im Bildsensor B1 vorliegenden Bilddaten werden pixelweise an die erste Steuereinheit C1 übertragen, wobei ein Pixel unter einer vorgegebenen Pixeladresse einen Grauwert enthält. Die vom Bildsensor B1 gelieferten Bilddaten werden von einer Rektifizierungssteuerung C 13 in der ersten Steuereinheit C1 verarbeitet. Die Rektifizierungssteuerung C13 steuert das Entzerren des Sourcebildes S1 zu einem Targetbild T1. Das Sourcebild S1 wird im wesentlichen pixelweise mit Hilfe einer in einem Speicher M10 abgelegten Rektifizierungstabelle TA in ein Targetbild T1 abgebildet. Das linke, entzerrte (rektifizierte) Targetbild T1 und das entsprechende rechte Targetbild T2 werden in einem Zwischenspeicher (Targetspeicher) M11, M12 in der ersten Steuereinheit C1 abgelegt. Ein Census-Transformator C11 liest zumindest Teile der beiden Targetbilder T1, T2 aus, bearbeitet diese und korreliert die Teile des linken und des rechten Targetbildes T1, T2 miteinander, wodurch Abstandinformationen des aufgenommenen Bildes gewonnen werden.

Vorzugsweise wird die Korrelation in einem Korrelator C12 durchgeführt, dem jeweils 6 vorbearbeitete Zeilen des linken Targetbildes 1 und 6 vorbearbeitete Zeilen des rechten Targetbildes T2 zugeführt werden. Das korrelierte und mit Abstandsinformationen versehene Abstandsbild AB wird in einem Speicher M0 abgelegt. Vorzugsweise werden nur einige Zeilen des korrelierten Bildes abgelegt oder transformiert. Eine in der ersten Steuereinheit C1 befindliche zentrale Steuereinheit C10 steuert alle in der ersten Steuereinheit C1 enthaltenen Funktionsblöcke T1, C13, MUX1, MUX2, C11, C12, und die Speicher M10, M11, M12, M0. Vor den Targetspeichern M11, M12 und dem Speicher M10 sind jeweils Multiplexer MUX2, MUX1 vorgesehen, mit denen die zentrale Steuereinheit C10 die Speicherzugriffe auf die einzelnen Speicherbereiche steuert.

Die zentrale Steuereinheit C10 wird von einer zweiten Steuereinheit C2 gesteuert. Die zweite Steuereinheit C2 ist weitgehend von den zeitkritischen Anforderungen zum Auslesen der Bildsensoren B1, B2 und der nachfolgenden Rektifizierung und Korrelation der Bilddaten freigestellt und somit zeitlich entkoppelt. Dadurch kann die Steuereinheit C2 flexibel auf äußere Ereignisse, die beispielsweise von einem über ein Interface angeschlossenen Airbagsteuergerät C3 gestellt werden, reagieren. Die zweite Steuereinheit C2 ist mit einem Arbeitsspeicher M2 und einem nichtflüchtigen Speicher M3 ausgestattet. Die in Speicher M0 der ersten Steuereinheit C1 gespeicherten entzerrten und korrelierten Bilddaten werden auf Anforderung der zweiten Steuereinheit C2 an diese übertragen. Weiterhin liefert die zentrale Steuereinheit C2 den Systemtakt (Sytem Clock) und übeträgt Befehle (Execute) an die zentrale Steuereinheit C10 der ersten Steuereinheit C1. Die vom Speicher M0 übertragenen Bilddaten werden in der zweiten Steuereinheit C2 weiter verarbeitet. In der zweiten Steuereinheit C2 wird ein Algorithmus zur Mustererkennung durchgeführt, wodurch aus den Bilddaten der Belegungszustand eines Fahrzeugsitzes klassifiziert wird.

Vorteilhaft wird aufgrund des in der ersten Steuereinheit C1 vorhandenen Speichers M10, M11, M12 kein externer Speicher mit entsprechend vielen erforderlichen Leitungen benötigt.

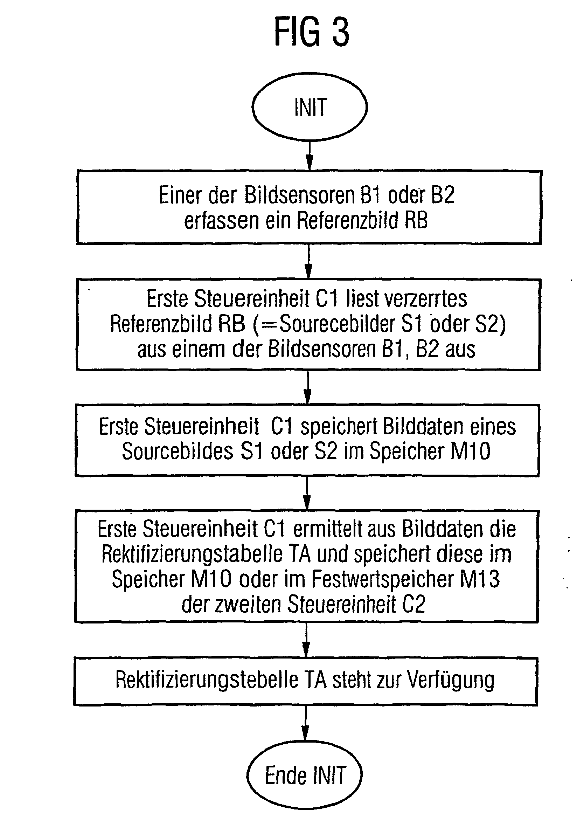

In Figur 3 ist das Flussdiagramm zum Initialisieren einer Vorrichtung zur Bildverarbeitung dargestellt. Die Optiken OPT1 und OPT2 sollen möglichst kostengünstig hergestellt werden, wodurch hohe Fertigungstoleranzen resultieren. Dadurch erhält jede Optik OPT1, OPT2 unterschiedliche Verzerrungen. Mit der im Folgenden beschriebenen Initialisierungsroutine wird für jede Optik am Bandende der Fertigung eine zu der jeweiligen Optik gehörige Rektifizierungstabelle TA erstellt. Dadurch ist es vorteilhaft möglich, auch hohe Fertigungstoleranzen einer Optikbaureihe auszugleichen.

Zu Beginn der Initialisierungsroutine wird ein Referenzbild RB in eine vorgegebenen Position vor die Optik OPT1 des Bildsensors B1 gehalten. Das Referenzbild RB weist ein vorgegebenes Muster, beispielsweise vertikale und horizontale Linien L2,L1 und/oder Punkte P auf, die jeweils eine vorgegebene Position einnehmen. Der Bildsensor B1 erfasst nun das Referenzbild RB, wodurch ein verzerrtes Referenzbild, z.B. das Sourcebild S1 im Bildsensor B1, entsteht. Die dem Sourcebild S1 zugeordneten Bilddaten werden von der ersten Steuereinheit C1 ausgelesen und in dem Speicher M10 abgespeichert. Die erste Steuereinheit C1 ermittelt aus den Bilddaten mit Hilfe einer vorgegebenen Rechenvorschrift die Rektifizierungstabelle TA und speichert diese im Speicher M10 im Festspeicher M13 der zweiten Steuereinheit C2. Die Tabellendaten der Rektifizierungstabelle TA werden später, z.B. beim Einschalten des Insassenschutzsystems, bei der Initialisierung in den Speicher M10 kopiert.

In einer weiteren Ausführungsform wird die Rechenvorschrift zur Ermittlung der Rektifizierungstabelle TA in der zweiten Steuereinheit C2 durchgeführt. Dies ist möglich, da das Erstellen der Rektifizierungstabelle TA am Bandende geschieht und somit nicht zeitkritisch ist.

Die Rektifizierungstabelle TA steht nun in einem Festwertspeicher M3 zur Verfügung. Somit ist die Initialisierung beendet.

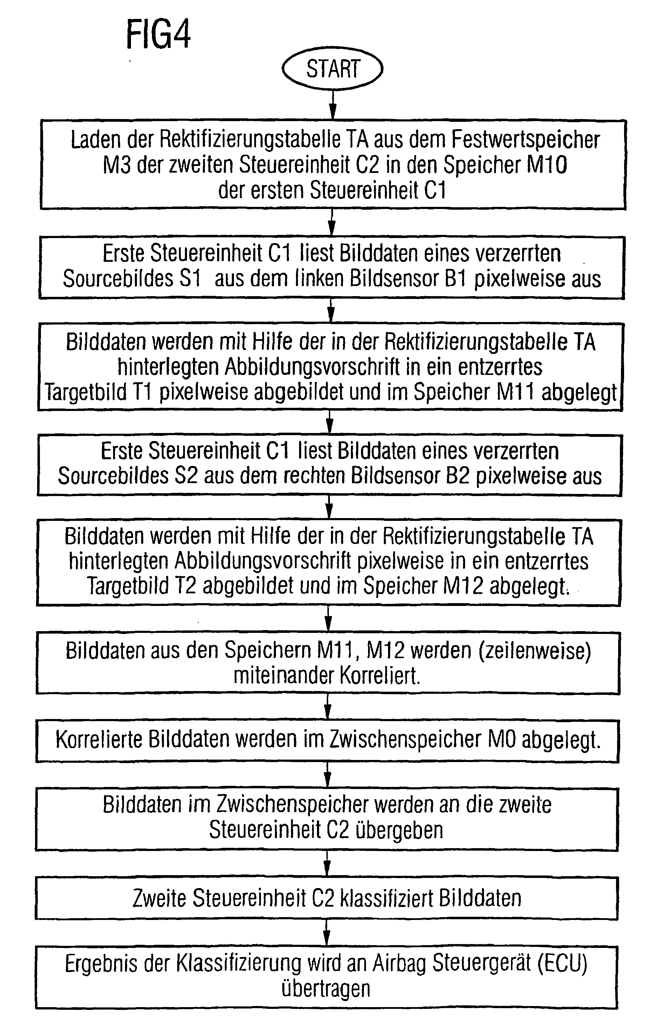

In der Figur 4 ist das Flussdiagramm einer Bildverarbeitungsroutine dargestellt. Zu Beginn der Routine wird die Rektifizierungstabelle TA aus dem Festwertspeicher M3 der zweiten Steuereinheit C2 in den Speicher M10 der ersten Steuereinheit C1 geladen. Die Rektifizierungstabelle TA ist dabei beispielhaft für die Bearbeitung eines Sourcebildes S1 des Bildsensors B1 dargestellt. Für jeden Bildsensor ist vorzugsweise eine Rektifizierungstabelle vorgesehen.

Die erste Steuereinheit C1 liest die Bilddaten des verzerrten Sourcebildes S1 aus dem linken Bildsensor B1 pixelweise aus. Die Daten werden in der Rektifizierungssteuerung C13 der ersten Steuereinheit C1 pixelweise mit Hilfe der in der Rektifizierungstabelle TA hinterlegten Abbildungsvorschrift in ein entzerrtes Targetbild T1 abgebildet. Das entzerrte Targetbild T1 wird im Speicher M1 abgelegt. Entsprechend werden die Bilddaten des verzerrten Sourcebilde S2 bearbeitet. Das dabei entstehende Targetbild T2 wird im Targetspeicher M12 abgelegt.

Die Bilddaten der Targetbilder T1, T2 werden vorzugsweise zeilenweise aus den Speichern M11, M12 ausgelesen und mit Hilfe einer vorgegebenen Census-Transformation bearbeitet. Dabei entstehen linke und rechte Censuszeilen, vorzugsweise sechs pro linkem und rechtem Bild, die zwischengespeichert werden und zeilenweise miteinander korreliert werden. Die Bilddaten der Pixel der korrelierten Zeilen enthalten zusätzlich Abstandsinformationen und werden in dem Speicher M0 abgelegt. Auf Anfrage werden diese Bilddaten an die zweite Steuereinheit C2 übertragen, die nun die übertragenen Bilddaten mit Hilfe von Mustererkennungsalgorithmen klassifiziert. Das Ergebnis der Klassifizierung wird an das Airbagsteuergerät C3 (ECU) übertragen.

Die erste Steuereinheit C1 ist vorzugsweise als ASIC (Application Specific Integrated Circuit) oder als FPGA (Field Programmable Gate Array) ausgebildet. Die zweite Steuereinheit C2 ist vorzugsweise als Microcontroller oder Microprozessor ausgebildet. Die erste und die zweite Steuereinheit C1, C2 können jeweils in einem Gehäuse eingebaut und miteinander über leitfähigen Kontaktbahnen verbunden sein. In einer weiteren Ausführungsform sind die erste und die zweite Steuereinheit C1, C2 in einem Gehäuse oder sogar auf einem Chip integriert. In der zweiten Steuereinheit C2 können weiterhin Auslöseentscheidungen für Insassenschutzsysteme durchgeführt werden.

In der ersten Steuereinheit C1 werden viele Verfahrensschritte parallel durchgeführt, wogegen in der zweiten Steuereinheit C2 nur wenige Verfahrensschritte oder nur ein Verfahrensschritt parallel verarbeitet werden.

**Patentansprüche**

1.  Vorrichtung zur Verarbeitung von Bilddaten, insbesondere in Bilderfassungssystemen für Insassenschutzsysteme, wobei

    -   eine in Echtzeit arbeitende erste Steuereinheit (C1) vorhanden ist, die die Grauwerte der als Sourcebildpixel vorliegenden Bilddaten aus mindestens einem Bildsensor (B1,B2) ausliest;
    -   die erste Steuereinheit (C1) die von einer Optik verzerrten Bilddaten mit Hilfe einer tabellarischen Abbildungsvorschrift entzerrt so dass ein sog. Targetbild entsteht, dieses mit Abstandsinformationen versieht; und
    -   eine zweite Steuereinheit (C2) vorhanden ist, die die erste Steuereinheit (C1) steuert und die von der ersten Steuereinheit (C1) bearbeiteten Targetbilddaten und Abstandsinformationen übernimmt, und damit eine Sitzbelegungs-Klassifizierung durchführt,

    **dadurch gekennzeichnet, dass**

    -   das Targetbild weniger Pixel aufweist als das Sourcebild.

2.  Vorrichtung nach Anspruch 1, **dadurch gekennzeichnet, dass**

    -   die erste Steuereinheit (C1) eine in einem ersten Speicher (M10) abgelegte Rektifizieruhgstabelle (TA) enthält, mit deren Hilfe eine Abbildungsvorschrift zum Entzerren eines von einem Bildsensor (B1,B2) gelieferten Bildes durchführbar ist.

3.  Vorrichtung nach einem der vorherigen Ansprüche, **dadurch gekennzeichnet, dass**

    -   zur Initialisierung der Rektifizierungstabelle (TA) die Bilddaten eines von einem oder mehreren Bildsensoren aufgenommenen Referenzbildes in dem ersten Speicher gespeichert ist.

4.  Vorrichtung nach einem der vorherigen Ansprüche, **dadurch gekennzeichnet, dass**

    -   die erste Steuereinheit (C1) als ASIC oder FPGA ausgebildet ist,
    -   die zweite Steuereinheit (C2) als Mikrocontroller oder Mikroprozessor ausgebildet ist, und
    -   die erste und die zweite Steuereinheit getrennt oder in einem IC-Gehäuse und/oder auf einem Chip angeordnet sind.

**5.** Vorrichtung nach einem der vorherigen Ansprüche, **dadurch gekennzeichnet, dass**

- zwei Bildsensoren (B1,B2) vorhanden sind, wobei die erste Steuereinheit (C1) die jeweilig entzerrten Bilddaten miteinander zu einem Abstandsbild korreliert.

**6.** Vorrichtung nach einem der vorherigen Ansprüche, **dadurch gekennzeichnet, dass**

- mindestens ein Bildsensor, vorzugsweise zwei oder vier Bildsensoren über die erste Steuereinheit (C1) an die zweite Steuereinheit (C2) angebunden ist.

**7.** Verfahren zur Verarbeitung von Bilddaten, insbesondere in Bilderfassungssystemen für Insassenschutzsysteme, bei dem

- die in einem Bildsensor (B1, B2) verfügbaren Bilddaten eines von einer Optik verzerrten Sourcebildes (S) aus dem Bildsensor (B1,B2) von einer in Echtzeit arbeitende ersten Steuereinheit (C1) ausgelesen werden, mit Hilfe einer tabellarischen Abbildungsvorschrift entzerrt werden so dass ein sog. Targetbild entsteht, und dieses mit Abstandsinformationen versehen wird; wobei
- mit den von der ersten Steuereinheit (C1) übernommenen entzerrten Targetbilddaten und Abstandsinformationen in einer zweiten Steuereinheit (C2), welche die erste Steuereinheit (C1) steuert, eine Sitzbdegungsklassifikation durch geführt wird;

**dadurch gekennzeichnet, dass**

- das Targetbild weniger Pixel aufweist als das Sourcebild.

**8.** Verfahren nach einem der vorherigen Verfahrensansprüche, **dadurch gekennzeichnet, dass** ein Pixel unter einer vorgegebenen Pixeladresse einen Grauwert enthält.

**9.** Verfahren nach einem der vorherigen Verfahrensansprüche, **dadurch gekennzeichnet, dass**

- das Targetbild (T) bzw. die Bilddaten des Targetbildes (T) in einem Speicher (M11, M12) der ersten Steuereinheit (C1) zwischengespeichert wird.

**10.** Verfahren nach einem der vorherigen Verfahrensansprüche, **dadurch gekennzeichnet, dass**

- bei Vorhandensein eines ersten und eines zweiten Bildsensors (B1, B2) die beiden erzeugten entzerrten Targetbilder zur Ermittlung von Abstandsinformationen miteinander vorzugsweise zeilenweise korreliert werden, und
- die dabei entstehenden mit Abstandsinformationen versehenen Bildpixel bzw. Bilddaten der Bildpixel, vorzugsweise in mindestens einer Bildzeile angeordnet, in einem Speicher (M0) der ersten Steuereinheit zwischengespeichert wird, und
- die zwischengespeicherten Bildpixel bzw. Bilddaten der Bildpixel vorzugsweise auf Anforderung einer zweiten Steuereinheit (C2) an die zweite Steuereinheit (C2) zur weiteren Verarbeitung übergeben werden, wobei in der zweiten Steuereinheit (C2) die Fahrzeugsitzbelegungs-Klassifizierung durchgeführt wird.

**11.** Verfahren nach Anspruch 10, **dadurch gekennzeichnet, dass**

- das Ergebnis der Fahrzeugsitzbelegungs-Klassifizierung an eine zentrale Insassenschutz-Steuereinrichtung (C3) weitergegeben wird.

**12.** Verfahren nach einem der vorherigen Verfahrensansprüche, **dadurch gekennzeichnet, dass**

- zur Initialisierung bzw. zur Erstellung der Rektifiziertabelle ein vorgegebenes Referenzbild von dem mindestens einen Bildsensor (B1,B2) aufgenommen wird,
- das aufgenommene Referenzsourcebild aus dem Bildsensor (B1,B2) ausgelesen und in dem ersten Speicher (M10) gespeichert wird,
- aus dem abgespeicherten Referenzsourcebild die Rektifiziertabelle erstellt wird, und
- die erstellte Rektifiziertabelle (TA) in dem ersten Speicher (M10) gespeichert wird, wobei
- das im ersten Speicher (M10) abgespeicherte Referenzsourcebild vorzugsweise von der Rektifiziertabelle (TA) zumindest teilweise überschrieben wird.

**13.** Verfahren nach einem der vorherigen Verfahrensansprüche, **dadurch gekennzeichnet, dass**

- das Referenzbild ein vorgegebenes Muster aufweist.

**14.** Verfahren nach einem der vorherigen Verfahrensansprüche, **dadurch gekennzeichnet, dass**

- das Referenzbild von beiden Bildsensoren aufgenommen wird und als Referenz für die Korrelation dient.

15. Verfahren nach einem der vorherigen Verfahrensansprüche, **dadurch gekennzeichnet, dass**

    - pro Bildsensor (B1, B2) eine Rektifiziertabelle (TA) vorgesehen ist oder eine Rektifiziertabelle für alle Bildsensoren (B1, B2) vorhanden ist.

16. Verfahren nach einem der vorherigen Verfahrensansprüche, **dadurch gekennzeichnet, dass**

    - der Systemtakt der zweiten Steuereinheit (C2) unabhängig vom Systemtakt der ersten Steuereinheit ist.

17. Verfahren nach einem der vorherigen Verfahrensansprüche, **dadurch gekennzeichnet, dass**

    - die Bildverarbeitung in der ersten Steuereinheit (C1) parallel zur Klassifizierung in der zweiten Steuereinheit (C2) abläuft.

18. Verfahren nach einem der vorherigen Verfahrensansprüche, **dadurch gekennzeichnet, dass**

    - die erste und die zweite Steuereinheit (C1, C2) unabhängig voneinander arbeiten.

## Claims

1. Arrangement for processing image data, particularly in imaging systems for occupant protection systems, wherein

    - a first control unit (C1) working in real time is present which reads out from at least one image sensor (B1, B2) the grayscale values of the image data present as source image pixels,
    - the first control unit (C1) corrects the image data distorted by an optical system using a tabular mapping rule so that a so-called target image is produced, provides this with range information, and
    - a second control unit (C2) is present which controls the first control unit (C1) and takes over the target image data and range information processed by the first control unit (C2), and thus performs a seat occupancy classification,

    **characterized in that**

    - the target image has fewer pixels than the source image.

2. Arrangement according to Claim 1, **characterized in that**

    - the first control unit (C1) contains a rectification table (TA) stored in a first memory (M10) and which can be used to execute a mapping rule for correcting an image supplied by an image sensor (B1, B2).

3. Arrangement according to one of the preceding claims, **characterized in that**

    - to initialize the rectification table (TA), the image data of a reference image captured by one or more image sensors is stored in the first memory.

4. Arrangement according to one of the preceding claims, **characterized in that**

    - the first control unit (C1) is implemented as an ASIC or FPGA,
    - the second control unit (C2) is implemented as a microcontroller or microprocessor, and
    - the first and the second control unit are disposed separately or in an IC housing and/or on a chip.

5. Arrangement according to one of the preceding claims, **characterized in that**

    - two image sensors (B1, B2) are present, the first control unit (C1) correlating the corrected image data in each case to produce a range image.

6. Arrangement according to one of the preceding claims, **characterized in that**

    - at least one image sensor, preferably two or four image sensors, are linked via the first control unit (C1) to the second control unit (C2).

7. Method for processing image data, particularly in imaging systems for occupant protection systems, wherein

    - the image data available in an image sensor (B1, B2) of a source image (S) distorted by an optical system is read out from the image sensor (B1, B2) by a first control unit (C1) working in real time using a tabular mapping rule so that a so-called target image is produced, and this is provided with range information, whereby
    - a seat occupancy classification is carried out, using the corrected target image data and range information taken from the first control unit (C1), in a second control unit (C2) which controls the first control unit (C1),

**characterized in that**

- the target image has fewer pixels than the source image.

8. Method according to one of the preceding claims, **characterized in that** a pixel under a predefined pixel address contains a grayscale value.

9. Method according to one of the preceding claims, **characterized in that**

- the target image (T) or the image data of the target image (T) is buffered in a memory (M11, M12) of the first control unit (C1).

10. Method according to one of the preceding claims, **characterized in that**

- if a first and a second image sensor (B1, B2) are present, the two corrected target images produced are preferably correlated row-wise with one another to determine range information, and
- the resulting image pixels or image data of the image pixels provided with range information, preferably disposed in at least one image row, are buffered in a memory (M0) of the first control unit, and
- preferably at the request of a second control unit (C2), the buffered image pixels or image data of the image pixels are transferred to the second control unit (C2) for further processing, vehicle seat occupancy classification being performed in the second control unit (C2).

11. Method according to Claim 10, **characterized in that**

- the result of the vehicle seat occupancy classification is forwarded to a central occupant protection control unit (C3).

12. Method according to one of the preceding claims, **characterized in that**

- to initialize or create the rectification table, a predefined reference image is captured by at least one image sensor (B1, B2),
- the captured reference source image is read out of the image sensor (B1, B2) and stored in the first memory (M10),
- the rectification table is created from the stored reference source image, and
- the created rectification table (TA) is stored in the first memory (M10), whereby
- the reference source image stored in the first memory (M10) is preferably at least partially overwritten by the rectification table (TA).

13. Method according to one of the preceding claims, **characterized in that**

- the reference image has a predefined pattern.

14. Method according to one of the preceding claims, **characterized in that**

- the reference image is captured by the two image sensors and used as reference for the correlation.

15. Method according to one of the preceding claims, **characterized in that**

- a rectification table (TA) is provided for each image sensor (B1, B2) or one rectification table is available for all the image sensors (B1, B2).

16. Method according to one of the preceding claims, **characterized in that**

- the system clock of the second control unit (C2) is independent of the system clock of the first control unit.

17. Method according to one of the preceding claims, **characterized in that**

- image processing in the first control unit (C1) is executed in parallel with classification in the second control unit (C2).

18. Method according to one of the preceding claims, **characterized in that**

- the first and the second control unit (C1, C2) operate independently of one another

**Revendications**

1. Dispositif pour traiter des données image, en particulier dans des systèmes de saisie d'images pour systèmes de protection des occupants, dans lequel

- il est prévu une première unité de commande (C1) travaillant en temps réel qui extrait les niveaux de gris des données image, présentes sous la forme de pixels d'image source, d'au moins un capteur d'images (B1, B2) ;
- la première unité de commande (C1) redresse les données image déformées par une optique, à l'aide d'une règle de reproduction en forme de table, de sorte qu'on obtient ce qu'on appelle une image cible, et elle munit cette dernière, d'informations de distance ; et

- il est prévu une deuxième unité de commande (C2) qui commande la première unité de commande (C1) et prend en charge les données image cible et informations de distance traitées par la première unité de commande (C1) et exécute avec ces données une classification d'occupation des sièges,

**caractérisé en ce que** l'image cible présente moins de pixels que l'image source.

2. Dispositif selon la revendication 1, **caractérisé en ce que**

- la première unité de commande (C1) contient une table de rectification (TA) enregistrée dans une première mémoire (M10) et à l'aide de laquelle une règle de reproduction peut être exécutée pour le redressement d'une image fournie par un capteur d'images (B1, B2).

3. Dispositif selon une des revendications précédentes, **caractérisé en ce que**

- pour l'initialisation de la table de rectification (TA), les données image d'une image de référence prise par un ou plusieurs capteurs d'images sont mémorisées dans la première mémoire.

4. Dispositif selon une des revendications précédentes, **caractérisé en ce que**

- la première unité de commande (C1) est constituée par un ASIC ou un FPGA,
- la deuxième unité de commande (C2) est constituée par un microcontrôleur ou un microprocesseur et
- les première et deuxième unités de commande sont disposées séparément ou dans un boîtier de circuit intégré et/ou sur une puce.

5. Dispositif selon une des revendications précédentes, **caractérisé en ce que**

- il est prévu deux capteurs d'images (B1, B2), la première unité de commande (C1) mettant les données image redressées en corrélation entre elles pour former une image de distance.

6. Dispositif selon une des revendications précédentes, **caractérisé en ce que**

- au moins un capteur d'images, de préférence deux ou quatre capteurs d'images, est ou sont reliés à la deuxième unité de commande (C2) par l'intermédiaire de la première unité de commande (C1).

7. Procédé pour le traitement de données image, en particulier dans des systèmes de saisie d'images pour systèmes de protection d'occupants, dans lequel

- les données image disponibles dans un capteur d'images (B1, 82) d'une image source (5) déformée par une optique sont lues à partir du capteur d'images (B1, 82) par une première unité de commande (C1) travaillant en temps réel, redressées à l'aide d'une règle de reproduction en forme de table, de sorte qu'il se forme ce qu'on appelle une image cible, et cette dernière est munie d'informations de distance ; et, avec les données image cible prises en charge par la première unité de commande (C1) et redressées, et des informations de distance, il s'effectue dans une deuxième unité de commande (C2) qui commande la première unité de commande (C1), une classification de l'occupation des sièges ;

**caractérisé en ce que**
l'image cible présente moins de pixels que l'image source.

8. Procédé selon une des revendications de procédés précédentes,
**caractérisé en ce que**
un pixel contient un niveau de gris sous une adresse de pixels prédéterminée.

9. Procédé selon une des revendications de procédés précédentes,
**caractérisé en ce que**
l'image cible (T) ou les données image de l'image cible (T) est ou sont mise(s) en mémoire intermédiaire dans une mémoire (M11, M12) de la première unité de commande (C1).

10. Procédé selon une des revendications de procédés précédentes,
**caractérisé en ce que**

- en présence d'un premier et d'un deuxième capteurs d'images (B1, B2), les deux images cible redressées produites sont mises en corrélation entre elles, de préférence ligne par ligne, pour obtenir des informations de distance, et
- les pixels image ou données image des pixels image munis d'informations de distance qui sont ainsi obtenus sont disposés de préférence en au moins une ligne d'images, enregistrés en mémoire intermédiaire dans une mémoire (M0) de la première unité de commande et

- les pixels image ou données image des pixels image mis en mémoire intermédiaire sont transférés à la deuxième unité de commande (C2), de préférence à la demande de la deuxième unité de commande (C2) pour le traitement ultérieur, la classification de l'occupation des sièges du véhicule s'effectuant dans la deuxième unité de commande (C2).

11. Procédé selon la revendication 10, **caractérisé en ce que**

- le résultat de la classification d'occupation des sièges du véhicule est transmis à un dispositif central de commande de la protection des occupants (C3).

12. Procédé selon une des revendications de procédés précédentes, **caractérisé en ce que**

- pour l'initialisation ou la production de la table de rectification, une image de référence prédéterminée est prise par l'au moins un capteur d'images (B1, B2),
- l'image source de référence prise est extraite du capteur d'images (B1, B2) et mémorisée dans la première mémoire (M10),
- la table de rectification est produite à partir de l'image source de référence mémorisée, et
- la table de rectification (TA) produite est mémorisée dans la première mémoire (M10), l'image source de référence mémorisée dans la première mémoire (M10) étant de préférence au moins partiellement écrasée par le table de rectification (TA).

13. Procédé selon une des revendications de procédés précédentes, **caractérisé en ce que**

- l'image de référence présente un motif prédéterminé.

14. Procédé selon une des revendications de procédés précédentes, **caractérisé en ce que**

- l'image de référence est prise par les deux capteurs d'images et sert de référence pour la corrélation.

15. Procédé selon une des revendications de procédés précédentes, **caractérisé en ce qu'**
il est prévu une table de rectification (TA) par capteur d'images (B1, B2) ou encore une table de rectification pour tous les capteurs d'images (B1, B2).

16. Procédé selon une des revendications de procédés précédentes, **caractérisé en ce que**

- le rythme de système de la deuxième unité de commande (C2) est indépendant du rythme de système de la première unité de commande.

17. Procédé selon une des revendications de procédés précédentes, **caractérisé en ce que**

- le traitement des images dans la première unité de commande (C1) se déroule parallèlement à la classification exécutée dans la deuxième unité de commande (C2).

18. Procédé selon une des revendications de procédés précédentes, **caractérisé en ce que**
la première unité de commande et la deuxième unité de commande (C1, C2) travaillent indépendamment l'une de l'autre.

FIG 1

# FIG 2

# FIG 3

INIT

Einer der Bildsensoren B1 oder B2
erfassen ein Referenzbild RB

Erste Steuereinheit C1 liest verzerrtes
Referenzbild RB (=Sourcebilder S1 oder S2)
aus einem der Bildsensoren B1, B2 aus

Erste Steuereinheit C1 speichert Bilddaten eines
Sourcebildes S1 oder S2 im Speicher M10

Erste Steuereinheit C1 ermittelt aus Bilddaten die
Rektifizierungstabelle TA und speichert diese im
Speicher M10 oder im Festwertspeicher M13
der zweiten Steuereinheit C2

Rektifizierungstebelle TA steht zur Verfügung

Ende INIT

# FIG4

START

Laden der Rektifizierungstabelle TA aus dem Festwertspeicher M3 der zweiten Steuereinheit C2 in den Speicher M10 der ersten Steuereinheit C1

Erste Steuereinheit C1 liest Bilddaten eines verzerrten Sourcebildes S1 aus dem linken Bildsensor B1 pixelweise aus

Bilddaten werden mit Hilfe der in der Rektifizierungstabelle TA hinterlegten Abbildungsvorschrift in ein entzerrtes Targetbild T1 pixelweise abgebildet und im Speicher M11 abgelegt

Erste Steuereinheit C1 liest Bilddaten eines verzerrten Sourcebildes S2 aus dem rechten Bildsensor B2 pixelweise aus

Bilddaten werden mit Hilfe der in der Rektifizierungstabelle TA hinterlegten Abbildungsvorschrift pixelweise in ein entzerrtes Targetbild T2 abgebildet und im Speicher M12 abgelegt.

Bilddaten aus den Speichern M11, M12 werden (zeilenweise) miteinander Korreliert.

Korrelierte Bilddaten werden im Zwischenspeicher M0 abgelegt.

Bilddaten im Zwischenspeicher werden an die zweite Steuereinheit C2 übergeben

Zweite Steuereinheit C2 klassifiziert Bilddaten

Ergebnis der Klassifizierung wird an Airbag Steuergerät (ECU) übertragen